(19) Europäisches Patentamt / European Patent Office / Office européen des brevets

(11) **EP 4 526 638 B1**

(12) **EUROPEAN PATENT SPECIFICATION**

(45) Date of publication and mention
of the grant of the patent:
**24.06.2026  Bulletin 2026/26**

(21) Application number: **23728684.4**

(22) Date of filing: **20.05.2023**

(51) International Patent Classification (IPC):
*G01L 1/24* ^(2006.01)      *G01L 5/00* ^(2006.01)
*G01B 11/16* ^(2006.01)      *G01B 11/26* ^(2006.01)

(52) Cooperative Patent Classification (CPC):
**G01L 1/248; G01B 11/16; G01B 11/26; G01L 5/009**

(86) International application number:
**PCT/EP2023/063539**

(87) International publication number:
**WO 2023/222916 (23.11.2023 Gazette 2023/47)**

(54) **OPTICAL SENSOR DEVICE**

OPTISCHE SENSORVORRICHTUNG

DISPOSITIF CAPTEUR OPTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.05.2022  GB 202207451**

(43) Date of publication of application:
**26.03.2025  Bulletin 2025/13**

(73) Proprietor: **University College Dublin, National University of Ireland, Dublin Dublin 4 (IE)**

(72) Inventors:
• **REDMOND, Stephen
Dublin (IE)**
• **CORDOVA BULENS, David
Dublin (IE)**
• **LESLIE, Olivia
Mosedale Penrith Cumbria CA11 0XQ (GB)**
• **MARTINEZ ULLOA, Pablo
46015 Valencia (ES)**

(74) Representative: **Barker Brettell LLP
100 Hagley Road
Edgbaston
Birmingham B16 8QQ (GB)**

(56) References cited:
**US-A1- 2014 326 882     US-A1- 2021 072 101
US-B2- 9 671 298**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Technical Field</u>

This invention relates generally to an optical-based sensor device for detecting displacement caused by a contact force/pressure, particularly, but not exclusively, for robotic and/or prosthesis applications.

<u>Background to the Invention</u>

Optical displacement sensors are devices that detect changes in the position of an object or target reference point relative to the sensor's detector based on measuring a change in a property of the detected light. The object can be remote from the sensor device or part of the device. **In** most implementations, the displacement sensor comprises a light emitting device to direct light onto the object or target reference point and a detector to detect the light reflected from the object. Some employ a position sensing detector (PSD) that outputs a signal dependent upon in the location of a reflected beam within a sensing area. Others employ an imaging device to capture the reflected beam profile and position. In either case, changes in the position of the object or target reference point result in a change in position and/or intensity of the reflected beam which can be used to infer a displacement in one or more dimensions.

Optical displacement sensors have numerous existing and emerging applications spanning industrial process monitoring and automation, to robotics and prosthetics. In the latter cases, optical displacement sensors can be utilised as tactile sensing elements that sense a pressure or force acting on the device for providing tactile feedback to the robot or user. Tactile feedback is especially important in performing common tasks such as griping, lifting and positioning objects, where the evaluation of gripping forces and slipping is required to safely handle the objects. Tactile sensing is an active field, in which the aim is for robotic and prosthetic grippers to emulate the dexterity and capability of the human hand. In this field and others, simplicity of manufacturability and scalability of design is important.

State-of-the-art optical-based tactile sensing elements include a light emitting device and detector within an elastomeric dome or protrusion which also supports a reflective surface. Force applied to the dome or protrusion displaces or deforms the reflective surface causing a change in the intensity of detected light from which force can be detected.

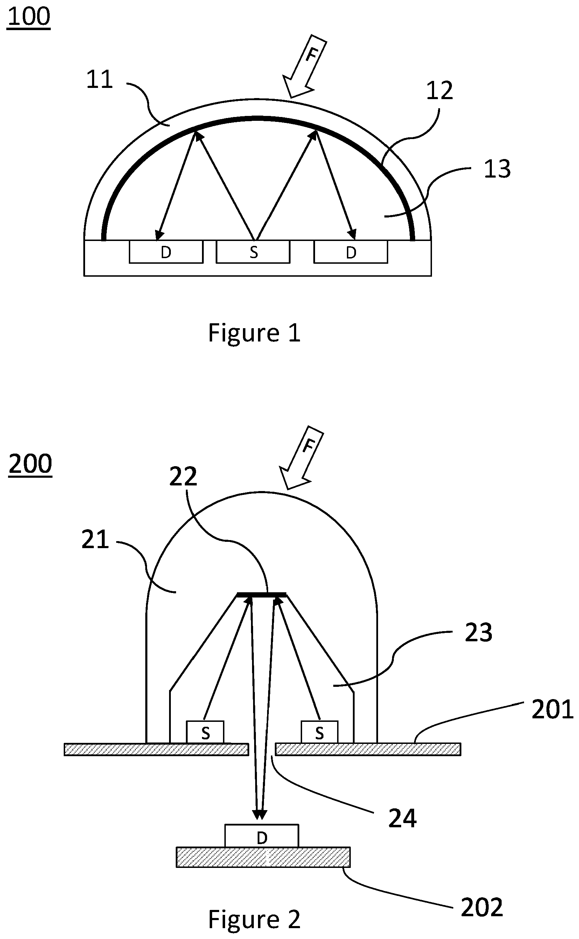

In US2010/0253650A1, the sensor device 100 has a flexible hollow dome 11 with a reflective inner surface 12 provided over an infrared (IR) source S and a plurality of IR detectors D, as shown in Figure 1. Deformation of the dome 11 caused by an applied force F changes the amount of light detected by each detector D, from which distribution the direction and magnitude of force can be inferred. In US2014/0326882A1, the above concept is developed by filling the cavity 13 of the dome 11 with at least one transparent filler material configured to focus light onto the detectors D from a wider solid angle and increase the device sensitivity. These devices have the advantage of being simple to manufacture but requires multiple detectors D distributed around the source S limiting its ability to be scaled down in size, and is also limited to hemispherical shapes to provide the required inner reflective surface 12.

In WO2019/033159A1, the sensor device 200 utilises a pinhole camera configuration formed over two discrete printed circuit board (PCB) layers 201, 202, to image the movement of a deformable silicone pillar 21 from the inside. A pair of IR sources S positioned either side of a pinhole aperture 24 in the first PCB layer 201 emit light up into a cavity 23 within a pillar 21 so as to reflect off a small reflector 22 at the top of the cavity 23, back through the pinhole aperture 24 and onto a quadrant photodiode D mounted on the second PCB layer 202 located at an appropriate distance below the first PCB layer 201. In this case, deformation of the pillar 21 caused by an applied force F moves the illuminated reflector 22 and changes the position and intensity of the spot on the quadrant photodiode D, from which the three-dimensional (3D) displacement of the reflector 22 can be determined. The measured 3D displacement allows the forces applied to the pillar 21 to be determined in all three dimensions, and arrays of these pillars can be used to estimate friction, but the use of two distinct PCB layers that must be aligned and kept at a fixed distance makes it difficult to manufacture and scale down in size.

Aspects and embodiments of the present invention have been devised with the foregoing in mind, particularly to provide a sensor device that can detect 3D displacement or force with a simple and scalable design.

<u>Summary of the Invention</u>

According to a first aspect of the invention, there is provided a sensor device for detecting or measuring a force acting on the device by optical means. A detectable force acting on the device causes displacement of a reference point in or on the device, which is detected using a light angle sensor. In some applications, the device may be used as a tactile sensor device.

The device comprises a direct or indirect light source and a light angle sensor configured to measure the angle and intensity of incident light from the light source. The device further comprises a deformable body or element configured to support the light source at a position above the light angle sensor so as to direct light onto the light angle sensor. The light source may be supported at or near the reference point, e.g. such that the light source moves with the reference point r(x,y,z) responsive to the applied force. The reference point may be located in or on (an external surface of) the deformable body. The incident angles and intensity of light are dependent on the position of the light source. The device is configured to detect displacement of the light source and/or reference point relative to the light angle sensor based, at least in part, on a change in the measured incident light angle produced by a deformation of the body that displaces the light source from a rest position. Deformation of the body is caused by a force or pressure acting on the device. The deformable body translates an applied force into displacement of the light source (and reference point) from the rest position relative to the light angle sensor. As such, the device is configured to produce a change in the measured angle and intensity of incident light in response to a pressure or force acting on the device that displaces the light source (and reference point) from a rest position.

The invention advances the state-of-the-art by simplifying the approach to transducing the position of the reference point or light source by optical means, thus improving the manufacturability and enabling significant reduction in sensor size compared to prior art configurations. The use of a light angle sensor and the detection/determination of displacement based (at least in part) on measured light angles means the device can detect and determine three-dimensional displacement without using a complicated pinhole camera design (see figure 2), which significantly simplifies the design and manufacturability of the sensor device. As such, in various embodiments, the device does not comprise a pinhole aperture between the light source and the light angle sensor.

In this context, "detection" refers to the identification/recognition that a displacement has occurred or a force has been applied in a given direction, while "determination" refers to the quantification of the detected displacement or force (i.e. determining a direction and/or magnitude). Displacement may be defined relative to the sensor reference frame.

The device may be configured to detect two-dimensional or three-dimensional displacement of the light source and/or reference point based, at least in part, on the measured incident light angle. The displacement may be a displacement vector. The two dimensions may be the X and Y-axes of the sensor reference frame and the three dimensions may be the X, Y and Z-axes in the sensor reference frame.

The device may be configured to detect lateral and/or angular displacement of the light source and/or reference point based on a change in the measured incident light angle.

The light angle sensor may be configured to detect infrared (IR) light. The light angle sensor may be configured to measure the angle of incident light in two (orthogonal) axes with respect to the sensor reference frame. The axes may be the X and Y-axes.

The device may be configured to detect displacement of the light source and/or reference point in two dimensions or in three dimensions based, at least in part, on the measured incident light angles (in the X and Y directions).

The device may be configured to detect displacement of the light source and/or reference point in three dimensions based on the measured angles and intensity of incident light.

The device further comprises a processing device in communication with the light angle sensor. The processing device may be configured to receive and process output data from the light angle sensor.

The processing device may be configured to determine a position and/or a displacement of the reference point based, at least in part, on the measured incident light angle.

The processing device may be configured to determine a position and/or a displacement of the reference point in three dimensions based on the measured incident light angles and the measured intensity. In this case, both angle and intensity information may be needed to decode the X or Y or Z coordinates.

The device may comprise two or more light angle sensors, each arranged and configured to measure the angle of incident light from the light source. Each light angle sensor may be configured to measure the incident light angle in two axes. The light angle sensors may be laterally separated from each other by a known distance, and optionally arranged in the same sensor reference plane. The device may be configured to detect a displacement of the light source and/or reference point in three dimensions based on the incident light angle measurements from the two or more light angle sensors, optionally or preferably using triangulation or multi-lateration. The X- position, Y-position, Z-position (or displacement) of the reference point may be calculated from the angle measurements using triangulation or multi-lateration.

In this case, the device can detect displacement of the light source and/or reference point in all three dimensions without using intensity information (i.e. without measuring or using a measured intensity). This has the advantage of not needing to control or compensate for drift in the brightness of the light source, or do any biasing before force is applied to the device.

The processing device may be in communication with the two or more light angle sensors, and configured to determine a position and/or a displacement of the reference point in three dimensions based on the incident light angle measurements from the two or more light angle sensors. In this case, only angle information may be needed to decode the X or Y or Z coordinates.

The processing device may further be configured to determine a force vector acting on the device based on the determined displacement.

The light angle sensor(s) may output sensor data comprising angle and intensity information. The light angle sensor may be configured to provide a light angle measurement without using an external pinhole aperture.

The light source may be a direct light source comprising a light emitting device, such as a light emitting diode.

Alternatively, the light source may be an indirect light source comprising a reflective surface. In this case, the device further comprises a light emitting device arranged and configured to illuminate the reflective surface, and the reflective surface is configured to reflect at least part of the light emitted by the light emitted device onto the light angle sensor. Optionally or preferably, the reflective surface is or comprises an optically diffuse surface.

The light emitting device is preferably arranged adjacent to the light angle sensor(s). The light emitting device and the light angle sensor(s) may be mounted on a carrier or substrate layer, preferably on the same surface of the carrier layer.

This simplifies the design and manufacturability of the device, e.g. compared to the prior art device which required a pinhole aperture and two distinct circuit board layers which must be aligned and kept at a fixed distance.

Alternatively, the light emitting device and the light angle sensor may not be mounted on a carrier layer. For example, the light emitting device and the light angle sensor may be at least partially embedded in or supported by the deformable element/body.

The light source may be attached to, or embedded or encapsulated in, the deformable body/element.

The light source may be substantially aligned over the light angle sensor in the rest position, so as to direct light onto the light angle sensor. Where there are two or more light angle sensors, light source may be aligned substantially centrally with respect to the two or more light angle sensors, so as to direct light onto all the light angle sensors.

The light source may be a substantially localised source. Here, the term "localised" means substantially small or point-like with respect to the dimensions of the light angle sensor.

The deformable body/element may extend at least partially around the light angle sensor. The deformable body/element may form part of a cover layer that extends over and/or around the light angle sensor(s). The cover layer may form a tactile interface layer for receiving an applied force. Where a carrier layer is present, the cover layer may be connected to the carrier layer at a proximal surface thereof. The cover layer may form a seal over/around the light angle sensor (and where present the light emitting device).

The cover layer may comprise a protrusion or depression positioned over the light angle sensor for receiving an applied force. The light source may be located substantially beneath the protrusion or depression. Where the cover layer comprises a protrusion, the device may be configured to detect and/or determine displacement of the distal end or tip of the protrusion.

Where the cover layer comprises a protrusion, the protrusion may be substantially elongated, so as to compress, tilt and/or deflect from the rest position in response to a force or pressure acting on its distal end. The protrusion may comprise a rounded distal end/tip. The protrusion may be substantially dome-shaped, hemispherical-shaped or conical-shaped.

The cover layer may encapsulate the light angle sensor (and, where present, the light emitting device(s)). Alternatively, the cover layer may comprise a cavity formed in a proximal end surface thereof that encloses the light angle sensor(s) (and, where present, the light emitting device(s)). The light source may be located at/on a distal end of the cavity, above the light angle sensor. Optionally or preferably, the light source is attached to, or embedded in, the cavity wall at the top of the cavity. The cavity may substantially dome-shaped, or hemispherical-shaped, or conical-shaped. The space within the cavity may be empty, or filled with an optically transparent deformable material.

The cover layer may be formed of or comprise an optically opaque material, at least in a region extending over/around the light angle sensor. The cover layer may be formed of or comprise an optically absorbent material (at least at the wavelength of emitted light), or a material that is substantially more absorbent or less reflective than the light source/reflective surface. This may reduce or prevent reflection of light from the cover layer, such that most or all of the light reaching the light angle sensor(s) comes from the light source/reflective surface.

The deformable body/element may be substantially resilient or elastically deformable so as to return the light source to the rest position in the absence of applied force. The deformable body/element may be formed of or comprise silicone or any other elastomeric and preferably mouldable material.

According to a second aspect of the invention, there is provided a method of detecting displacement of a reference point in or on a deformable body. The method can be implemented using the device of the first aspect. The method may comprise directing light onto a light angle sensor from a light source supported at a position above the light angle sensor by the deformable body, the light angle sensor configured to measure the angle and intensity of incident light from the light source. The light source may be located at or near the reference point such that it moves with the reference point. The reference point may be located on an external surface of the deformable body. The method may further comprise measuring the angle of light incident on a light angle detector from the light source; and detecting a displacement of the reference point relative to the light angle sensor based at least in part on a change in the measured light angle produced by a deformation of the body that displaces the light source from a rest position.

Measuring the angle of light incident on a light angle detector may comprise measuring the angle of light incident on a light angle detector from the light source in two orthogonal axes.

The method may further comprise measuring the intensity of light incident on the light angle detector; and

determining a three-dimensional position or displacement of the reference point based on the measured light angles and intensity.

The method may comprise directing light from the light source onto two or more light angle sensors; measuring the angle of light incident on each light angle detector from the light source in two orthogonal axes; and determining a three-dimensional position or displacement of the reference point based on the measured light angles, optionally using triangulation.

The measured angle and intensity of incident light on the light angle sensor may be based on the output of the light angle sensor.

Features which are described in the context of separate aspects and embodiments of the invention may be used together and/or be interchangeable. Similarly, where features are, for brevity, described in the context of a single embodiment, these may also be provided separately or in any suitable sub-combination. Features described in connection with the device may have corresponding features definable with respect to the method(s), and vice versa, and these embodiments are specifically envisaged.

Brief Description of Drawings

In order that the invention can be well understood, embodiments will now be discussed by way of example only with reference to the accompanying drawings, in which:

**Figures 1 and 2** show prior art sensor devices;
**Figure 3** shows a sensor device according to an embodiment of the invention;
**Figure 4** shows an illuminated diffuse reflector;
**Figure 5** shows a sensing circuit comprising the sensor of figure 3;
**Figures 6 to 10** show alternative embodiments of the sensor device of the invention;
**Figure 11** shows an image of a prototype sensor device according to another embodiment of the invention;
**Figure 12** shows output signals from the sensor device of figure 11;
**Figure 13** shows measured X and Y angles of light versus time as the device is deformed in a spiral pattern;
**Figure 14** shows the measured X and Y angles from figure 13 plotted against each other;
**Figures 15 and 16** show the measured X and Y angles plotted against each other for a spoke movement pattern at different Z displacements; and
**Figure 17** shows the intensity output of the device of figure 11 at varying Z displacements.

It should be noted that the figures are diagrammatic and may not be drawn to scale. Relative dimensions and proportions of parts of these figures may have been shown exaggerated or reduced in size, for the sake of clarity and convenience in the drawings.

The same reference signs are generally used to refer to corresponding or similar features in modified and/or different embodiments.

Detailed Description

The prior art sensor device 200 shown in figure 2 uses two discrete PCB layers 201, 202, a pinhole aperture 24 and a discrete quadrant photodiode D to decide the position of a reflector 22 and hence infer the position/displacement of the silicone pillar 21. This makes it difficult to manufacture and scale down in size as there are two distinct PCB layers 201, 202 that must be aligned and maintained at a fixed separation.

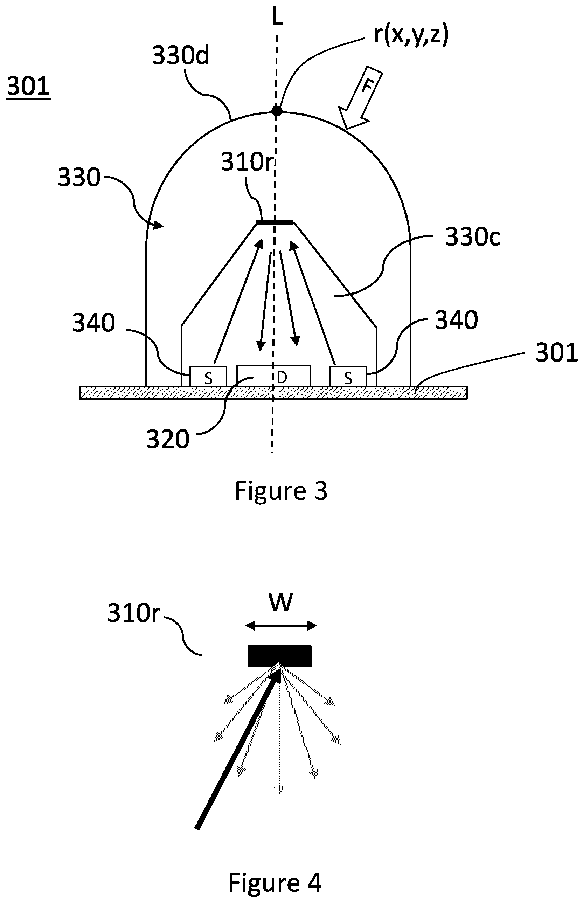

Figure 3 shows a schematic diagram of a sensor device 300 according to an embodiment of the present invention. The sensor device 300 is configured to detect and determine displacement of a reference point r(x,y,z) in or on the device in three dimensions based on measurements of light angles. The sensor device 300 comprises a light source 310, a light angle sensor 320, and a deformable element 330 configured to support the light source 310 at a position above the light angle sensor 320 so as to direct light onto the light angle sensor 320. The light angle sensor 320 is configured to measure the angle of incidence of light from the light source 310 in both X and Y directions. Light intensity is also measured, which contains information on the proximity of the light source 310. The light source 310 is connected to the light angle sensor 320 via the deformable element 330, such that a force applied to the device 300 that deforms the deformable element 330 is translated into displacement of the light source 310 relative to the light angle sensor 320. The incident light angles and intensity are dependent on the position of the light source 310 with respect to the sensor reference plane. **In** this way, the device 300 detects displacement of the light source 310 and reference point r(x,y,z) relative to the light angle sensor 320 based, at least in part, on a change in the measured incident light angle produced by a deformation of the element 330 that displaces the light source 310 from a rest position. Once the device is calibrated, the XYZ position and displacement of the reference point r(x,y,z) can be determined from the measured XY light angles and the measured intensity, as described in more detail below.

To allow the position of the reference point r(x,y,z) to be estimated based on the measured light angles, the light source 310 is located at or near the reference point r(x,y,z) such that the light source 310 moves (in a predicable way) with the reference point r(x,y,z) responsive to the applied force. In practice, the reference point r(x,y,z) is some externally observable point on the device and is thus typically located on an external surface of the deformable element 330, some distance away from the light source 310. This allows the device 300 to be readily calibrated (discussed in more detail below). In the illustrated embodiment comprising a protrusion, the reference point r(x,y,z) is preferably located at the distal end 330d directly above the light source 310 (see below).

In this embodiment, the light source 310 is an indirect light source in the form of a reflective surface 310r. The reflective surface 310r reflects at least a portion of light emitted from one or more infrared (IR) light emitting devices 340, such as light emitting diodes (LEDs) onto the light angle sensor 320. The reflective surface 310r is diffuse so that light is reflected in many directions from the surface 310r, as is known in the art. Preferably, the spatial extent of the reflective surface 310r, which can be characterised by its width W, is small enough to approximate a localised or point-like source, as indicated in figure 4. A localised source increases the sensitivity of the light angle measurement to displacement of the light source 310. However, in practice a balance is struck between sensitivity and signal, since reducing with the size W of the reflective surface 310r also reduces the amount of reflected light and thus the signal to noise ratio.

The light emitting device(s) 340 and the light angle sensor 320 mounted adjacent each other on a carrier layer 301, such as printed circuit board (PCB) or other suitable substrate with circuitry for connecting to the electronic components.

The deformable element 330 is formed from a deformable and preferably mouldable material such as silicone or another rubber-like or elastomeric material. The deformable element 330 forms a cover layer with an internal cavity 330c or pocket extending over the light angle sensor 320 and light emitting devices 340. This arrangement serves to both seal and/or protect the optical components from the external environment and provide an elevated surface above the light angle sensor 320 on which to attach the light source 310. Further, the deformable material is preferably optically absorbent at least in the IR wavelength range to prevent/reduce reflections from the cavity walls reaching the light angle sensor 320. The cover layer 330 may also prevent ambient light from outside the device reaching the light angle sensor 320. However, the light angle sensor may additionally or instead comprise an optical filter to filter out ambient light.

The deformable element 330 may comprise a predefined 3D shape specifically chosen or designed to exhibit certain intended mechanical properties, such as flexibility to deform in a predictable way, and/or in a way that translates deformation into displacement of the light source 310. **In** the illustrated embodiment, the deformable element 330 forms a substantially elongate protrusion extending from the carrier layer 301 for receiving the applied force F. An elongate protrusion deforms preferentially by compressing and/or tilting or deflecting about its longitudinal axis L upon application of a force to its distal end 330d. This predictable deformation allows the displacement of a reference point r(x,y,z) in or on the distal tip 330d to be estimated based on the measured displacement of the light source 310. As such, although the reference point r(x,y,z) is shown located on the tip 330d directly above the light source 310 in figure 3, the displacement of any point r(x,y,z) in or on the deformable element 330 may in principle be estimated based on the measured displacement of the light source 310 and the known geometry/mechanical properties of the deformable element 330.

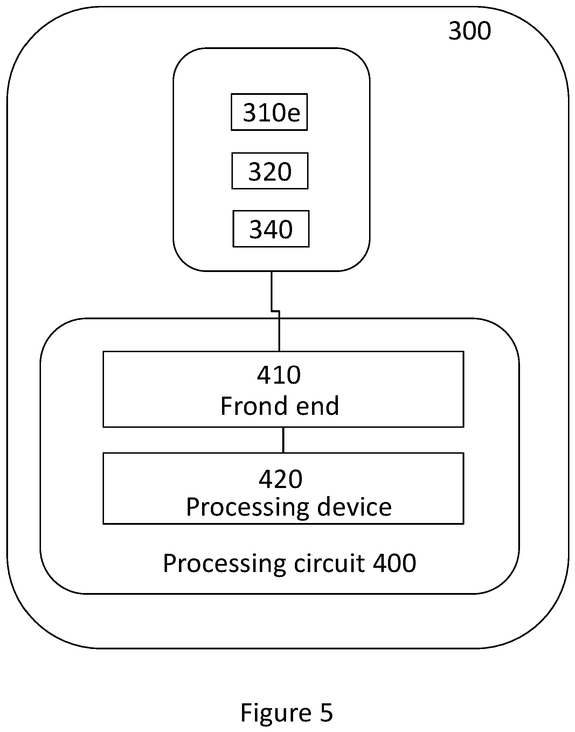

The optical components (e.g. light angle sensor 320 and light emitting devices 340) of the device 300 are in communication with a sensing/processing circuit 400 that facilitates readout and processing of data from the light angle sensor 320 and control of the light emitting devices 340, as shown in figure 5. The processing circuit 400 comprises front end components 410 to interface with and drive the optical components 320, 340 and a processing device 420 such as a controller for data acquisition and processing, as is known in the art. The front end components 410 may be mounted on the carrier layer 301 along with the light angle sensor 320 and light emitting device 340.

The processing device 420 is configured to determine a position and/or a displacement of the reference point r(x,y,z) in three dimensions based on the measured incident light angles and the measured intensity. Applied forces can then be estimated based on the measured displacement. In one implementation, a regression model is used to relate the output of the light angle sensor to a 3D position. However, it will be appreciated that there are various ways to perform this calculation/mapping. For example, machine learning models may also be used. Further, the position of the reference point r can be determined in cartesian coordinates and/or polar coordinates as required by the application.

By way of example, a suitable light angle sensor 320 is a commercially available Analog Devices ADPD2140 light angle sensor which has four output channels: two linked to the X angle ($X_L$ and $X_R$) and two linked to the Y angle ($Y_T$ and $Y_B$). The X and Y angles in the sensor reference plane and the intensity are given by the following equations:

$$\mathrm{X\ angle} = \frac{X_L - X_R}{X_L + X_R} \qquad\qquad\qquad (1)$$

$$Y \text{ angle} = \frac{Y_T - Y_B}{Y_T + Y_B} \qquad\qquad (2)$$

$$\text{Intensity} = X_L + X_R + Y_T + Y_B \qquad\qquad (3)$$

The four separate channels correspond to one single photodiode with four electrodes and hence does not need multiple distinct photodiodes to infer light angle. The processing device 420 can be configured to determine the 3D position of the light source 310 based on the outputs $X_L$, $X_R$, $Y_T$, $Y_B$ using regression models. In one implementation, the regression model is a polynomial multi-regression model of order greater than one, typically between 2 and 4. The more sensor data available for model fitting, the higher the order can be without overfitting.

For example, a second order model to estimate the X cartesian coordinate may have an equation of the following form, for inputs x1, x2 , x3, x4 (i.e. the light angle sensor outputs), and intensity (the sum of the four light angle sensor outputs) x5 = x1 + x2 + x3 + x4: X = constant + a*x1 + b*x2 +c*x3 + d*x4 + e*x5 + aa*x1*x1 + ab*x1*x2 + ... + ed*x5*x4 + ee*x5*x5, where constant, a, b, c, d, e, aa, ..., ee, are model coefficients determined through model fitting (e.g. linear least squares). For a second order model, there are 31 terms: 1 constant, 5 linear, 5x5 second order, as is known in the art. For the Y and Z cartesian coordinates, similar but independent models would be fitted to the experimental data.

Optionally, as a pre-processing step, the measurement vector x = (x1, x2, x3, x4, x5) can be normalised by a scale factor which is determined during a biasing event/time, such as a measurement taken when the sensor device 300 is not deformed, e.g. when first switched on. In this case, a normalised measurement vector is obtained $\hat{\underline{x}} = (\widehat{x1}, \widehat{x2}, \widehat{x3}, \widehat{x4}, \widehat{x5})$ at the bias time. For example, the normalised measurement vector may be obtained by dividing everything by the intensity (x5) measured at the time that the bias reading is taken. In this case, $\widehat{x5} = 1$ after this pre-processing step when the sensor 300 is not deformed. Normalising can remove any dependence of the outputs on light intensity, which may drift over time e.g. with temperature. The measurement can be biased repeatedly as required to compensate for drift.

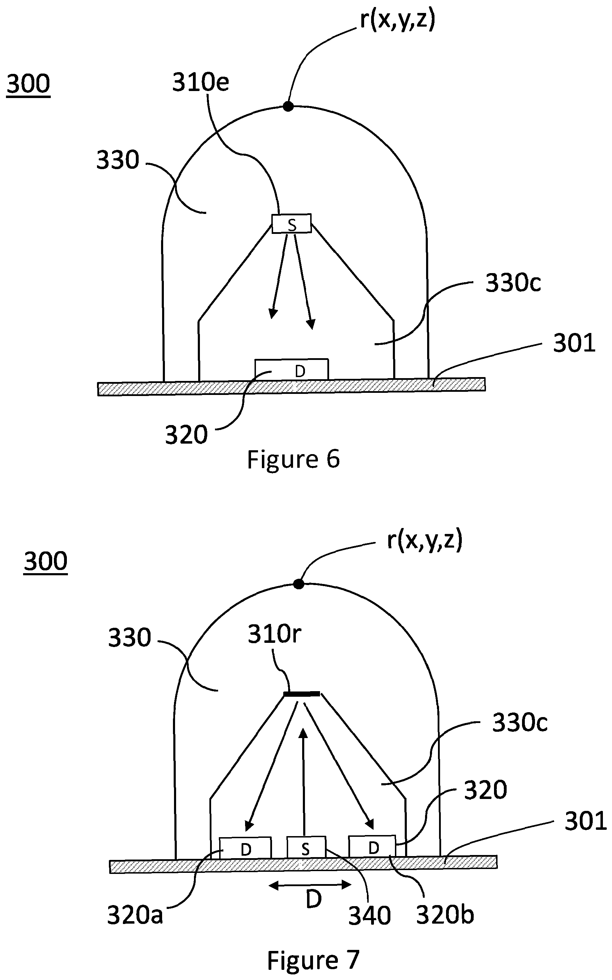

Figure 6 shows an alternative embodiment of the sensor device 300 in which the light source 310 is a direct light source in the form of a light emitted device 310e such as an LED that emits light directly onto the light angle sensor 320. The device 300 is otherwise the same as describe above, but in this case, no reflective surface is required and light emitting devices 340 can be omitted. It will be appreciated that whether the light source is direct or indirect, the detection principle is the same: deformation of the deformable element 330 causes displacement of the light source 310 (and reference point) which is detected via the change in measured light angle.

An LED 310e typically behaves as a localised source emitting light in a cone towards the light angle sensor 320. As such, a direct light source configuration provides high displacement sensitivity while also providing high signal to noise ratio for the measurement. The LED 310e can be attach to, embedded or encapsulated in the deformable element 310, and connections for the light source 310e (not shown) can be fed down to the carrier layer 301, e.g. wiring can also be embedded.

When one light angle sensor 320 is used, both angle and intensity information is needed to decode the X or Y or Z coordinates, since angular displacement will typically always alter the intensity of light falling on the light angle sensor 320.

Figure 7 shows another embodiment of the device 300 comprising two light angle sensors 320a, 320b each arranged and configured to measure the angle of incident light from the light source 310. In this case, 3D displacement of the reference point r(x,y,z) can be detected and determined based on the incident light angle measurements from the light angle sensors 320a, 320b using triangulation or multi-lateration, without using intensity information. Provided the positions of all the light angle sensors 320a, 320b are known, then XYZ coordinates can be determined by looking at the intersection of vectors emanating from each light angle sensors (given by the measured light angles). This has the advantage of not needing to control or compensate for drift in the output of the light source, or do any biasing/normalising before force is applied to the device 300.

Accordingly, the two light angle sensors 320a, 320b are laterally separated by a known distance D. Each light angle sensor 320a, 320b returns two angles, which effectively gives a vector along which the light is arriving from the light source 310. Knowing the position/coordinates of each light angle sensor 320a, 320b on the carrier layer 301, the 3D position of the light source 310 can be determined by projecting back along the vectors provided by each light angle sensor 320a, 320b to find the intersection in the 3D space. **In** scenarios where the light vectors do not intersect exactly (e.g., due to noise, etc.) the 3D position can be estimated by taking the midpoint of the shortest line that intersects both vectors (i.e., the point simultaneously closest to both incident light vectors). This approach provides the position of the light source 310 relative to the light angle sensors 320a, 320b, which can be mapped to the position of the reference point r using regression models (developed during calibration) similar to that described above for the single light angle sensor 320 embodiment.

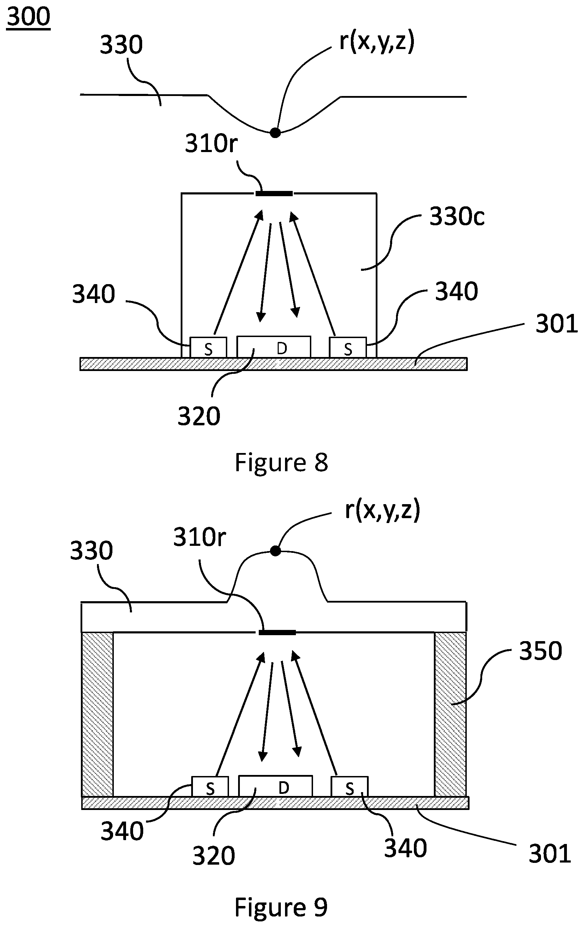

Figures 3 to 7 show specific embodiments of the sensor device 300 in which (among other things) the deformable element 330 comprises a protrusion with an internal cavity 330c. However, it will be appreciated that the invention can be implemented in many different ways - the main criterion being that the light source 310 is moveable with respect to the light angle sensor 320 in response to a force acting on the device 300. As such, it is not essential for the deformable element 330 to comprise a protrusion or a cavity 330c, or even for the light angle sensor 320 to be mounted on a carrier layer 301. By way of example only, to demonstrate this, various alternative embodiments are shown in figures 8-10.

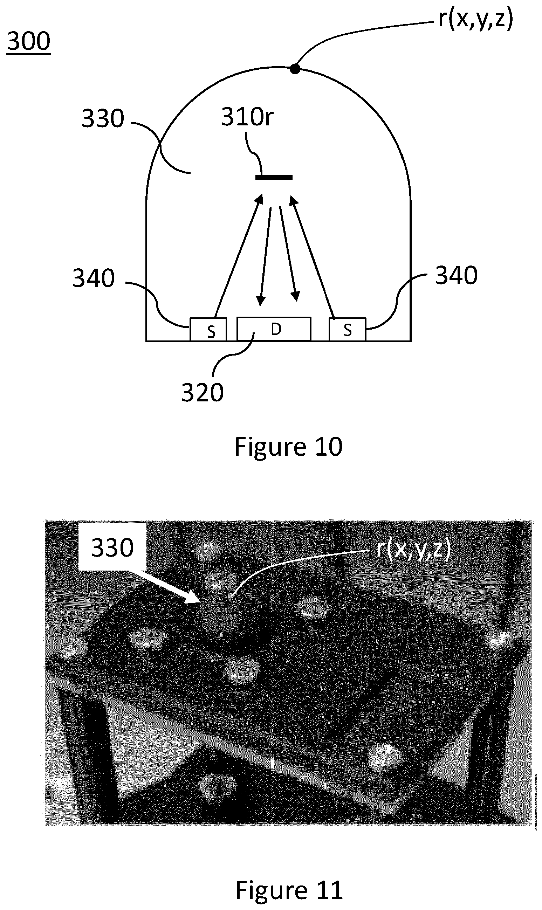

Figure 8 shows an embodiment of the sensor device 300 in which the deformable element 330 includes a depression 330 for receiving a force input. The deformable element 330 may otherwise be substantially planar. The cavity 330c can also be omitted, in which case the optical components 320, 340 are embedded or encapsulated in the deformable element. Figure 9 shows an embodiment of the device 300 in which the deformable element 330 is not coupled directly to the carrier layer 301 but is attached and supported by one or more rigid element(s) 350. In this case, cavity is formed between the deformable element 330 and the carrier layer 301 by the rigid element(s). The deformable element 330 can include a protrusion as shown, or be a depression or be substantially planar. Figure 10 shows an embodiment of the device 300 in which the optical components 310r, 320, 340 are embedded or encapsulated in the deformable element 330. In this case, there is no cavity 330c and a carrier layer 301 is not required as the components 330, 340 and any wiring/circuitry can be supported by the deformable element 330 itself. Although the embodiments of figures 8 to 10 include indirect light sources 310r with separate light emitting devices 340, the same principles can be applied to embodiments with direct light sources 310e.

Figure 11 shows an image of a prototype sensor device 300 corresponding to the embodiment of figure 3. The device 300 comprises a black silicone cover layer 330 with an approximately 9 mm high protrusion 330 clamped to a carrier layer 301. The protrusion has a substantially hemispherical distal end 330d to have a contact area with equal compressive forces. The deformable element 330 is moulded from opaque silicone with a Shore hardness of 20A making the structure soft and flexible. A reflective surface 310r with W=1.5 mm was formed using the same material but using a white dye. The sensing electronics comprise illumination LEDs 340, an ADPD2140 light angle sensor and a processing circuit 400. The front end components 410 comprised a photometric front end (ADPD1080) with a 14-bit analogue to digit converter to facilitate readout and simultaneously control the LEDs 340, and a microcontroller for data acquisition.

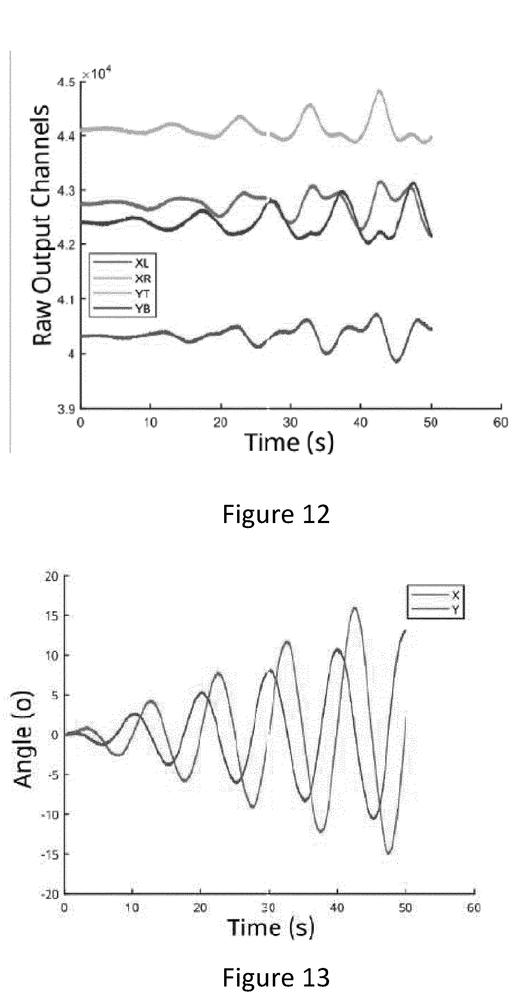

To test the device 300, the device 300 was mounted on top of a translation stage configured to move the device 300 in at least the XYZ directions. The translation stage was used to bring the device 300 into contact with a rigid surface to compress and frictionally engage the distal end 330d of the protrusion 330 and sample a range of 3D positions of a reference point r(x,y,z) at the tip in two movement patterns: a spiral pattern and spoke pattern. Each pattern was repeated at multiple Z positions to explore different compressions, and the light angle measurements were sampled at 200 Hz. The rigid surface was part of a transparent plate to enable visual inspection of the device 300 during testing. The results are shown in figures 12 to 17 and described below.

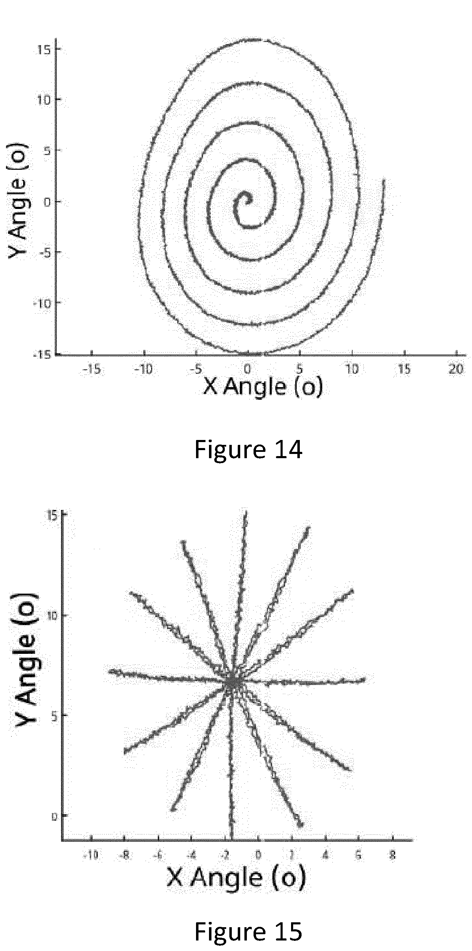

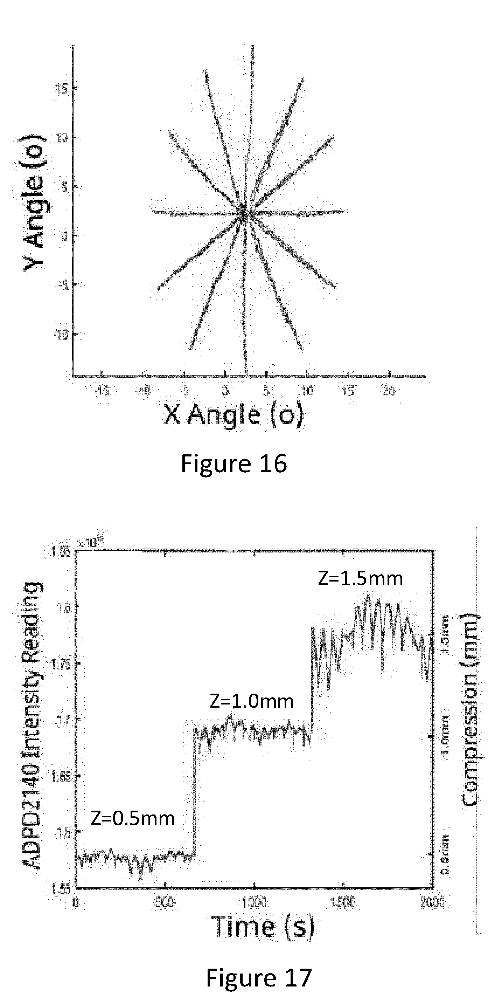

Figure 12 shows the raw output signals $X_L$, $X_R$, $Y_T$, $Y_B$ from the light angle sensor 310 versus time during a spiral pattern at a Z-displacement of 1 mm. Figure 13 shows the X and Y angles versus time extracted from the $X_L$, $X_R$, $Y_T$, $Y_B$ signals using equations 1 and 2. Figure 14 shows the X and Y angles plotted against each other showing the spiral movement pattern. Figures 15 and 16 show the corresponding reconstructed spoke pattern produced at a Z-displacement of 0.5 mm and 1 mm respectively. Figure 17 shows the light intensity signal versus time as the Z-displacement is incremented from 0.5 mm to 1.0 mm to 1.5 mm.

The experimental results demonstrate that the sensor device 300 can track the displacement of the reference point r(z,y,z) in the XY axes, with the measured angles faithfully reproducing the expected spiral and spoke movement patterns. Different compressions lead to different intensities in the output of the light angle sensor 320 allowing Z-displacement to be estimated. Visual inspection was used to confirm that the deformable element 330 moved as expected and that no slip occurred.

The device can be calibrated to determine the 3D position of the reference point r(x,y,z) based on the light angle sensor output using these results the known displacements of the translation stage. Further, movement of the device 300 can be imaged through the transparent plate to detect and correct for any slip that may occur.

With reference again to figure 2, the invention significantly simplifies the approach to transducing the position of the light source 310, thus improving the manufacturability and enabling significant rection in sensor size compared to prior art configurations. In particular, the above-described embodiments make novel use of an off-the-shelf light angle sensor enabling the 3D position of the light source 310 to be tracked using only one PCB layer 301, which in turn enables significant volume reduction.

The sensor device 300 can used in many applications, including as a tactile sensing element for robotic or prosthetic applications. In particular, in robotic or prosthetic gripper applications, the device 300 can be implemented as part of a larger tactile sensing array for measuring grip, load forces, incipient slip and/or friction.

From reading the present disclosure, other variations and modifications will be apparent to the skilled person. Such variations and modifications may involve equivalent and other features which are already known in the art, and which may be used instead of, or in addition to, features already described herein.

Features which are described in the context of separate embodiments may also be provided in combination in a single embodiment. Conversely, various features which are, for brevity, described in the context of a single embodiment, may also be provided separately or in any suitable sub-combination.

For the sake of completeness it is also stated that the term "comprising" does not exclude other elements or steps, the term "a" or "an" does not exclude a plurality, and any reference signs in the claims shall not be construed as limiting the scope of the claims.

**Claims**

1.   A sensor device, comprising:

 a direct or indirect light source;
 a light angle sensor configured to measure the angle and intensity of incident light from the light source; and
 a deformable element configured to support the light source at a position above the light angle sensor so as to direct light onto the light angle sensor;
 wherein the device is configured to detect displacement of the light source and/or a reference point in or on the deformable element relative to the light angle sensor based, at least in part, on a change in the measured incident light angle produced by a deformation of the element that displaces the light source from a rest position.

2.   The sensor device of claim 1, wherein the device is configured to detect lateral or angular displacement of the light source based on a change in the measured incident light angle.

3.   The device of claim 1 or 2, wherein the light angle sensor is configured to measure the angle of incident light in two axes with respect to the sensor reference frame.

4.   The device of claim 3, wherein the device is configured to detect displacement of the light source in two dimensions or three dimensions based, at least in part, on the measured incident light angles; and, optionally, wherein the device is configured to detect displacement of the light source in three dimensions based on the measured angles and intensity of incident light.

5.   The device of any preceding claim, wherein the device further comprises a processing device in communication with the light angle sensor, the processing device configured to determine a position and/or a displacement of the reference point based, at least in part, on the measured incident light angle; and, optionally, when dependent directly or indirectly from claim 3, wherein the processing device is configured to determine a position and/or a displacement of the reference point in three dimensions based on the measured incident light angles and the measured intensity.

6.   The device of any preceding claim, wherein the device comprises two or more light angle sensors each light angle sensor configured to measure the angle of incident light from the light source in two axes, and wherein the device is configured to detect displacement of the light source and/or reference point in three dimensions based on the incident light angle measurements from the two or more light angle sensors.

7.   The device of claim 6, wherein the device further comprises a processing device in communication with the two or more light angle sensors, the processing device configured to determine a three-dimensional position and/or displacement vector of the reference point based on the incident light angle measurements from the two or more light angle sensors; optionally using triangulation.

8.   The device of any of claims 5 or 7, wherein the processing device is further configured to determine a force vector acting on the device based on the determined displacement.

9.   The device of any preceding claim, wherein the device does not comprise a pinhole aperture between the light source and the light angle sensor(s); and/or wherein the light angle sensor is configured to provide a light angle measurement without using an external pinhole aperture; and/or wherein the light source is a direct light source comprising a light emitting device.

10.  The device of any of claims 1 to 9, wherein the light source is an indirect light source comprising a reflective surface and the device further comprises a light emitting device, the reflective surface configured to reflect at least part of the light emitted by the light emitted device onto the light angle sensor; optionally or preferably an optically diffuse surface; and, optionally, wherein the light emitting device is arranged adjacent the light angle sensor; and/or

wherein the light emitting device and the light angle sensor are mounted on the same carrier layer; or wherein the light emitting device and the light angle sensor are at least partially embedded in or supported by the deformable element.

11. The device of any preceding claim, wherein the light source is attached to, or embedded or encapsulated in, the deformable element; and/or
wherein the light source is a localised source.

12. The device of any preceding claim, wherein the deformable element forms part of a cover layer extending over the light angle sensor(s); and, optionally, wherein the cover layer comprises a protrusion or depression positioned over the light angle sensor; and/or
wherein the deformable element extends at least partially around the light angle sensor.

13. A method of detecting displacement of a reference point in or on a deformable element, comprising:

directing light onto a light angle sensor from a light source supported at a position above the light angle sensor by the deformable element, the light angle sensor configured to measure the angle and intensity of incident light from the light source;
measuring the angle of light incident on a light angle detector from the light source; and
detecting a displacement of the reference point relative to the light angle sensor based at least in part on a change in the measured light angle produced by a deformation of the element that displaces the light source from a rest position.

14. The method of claim 13, further comprising:

measuring the angle of light incident on a light angle detector from the light source in two orthogonal axes;
measuring the intensity of light incident on the light angle detector; and
determining a three-dimensional position or displacement of the reference point based on the measured light angles and intensity.

15. The method of claim 13 or 14, comprising:

directing light from the light source onto two or more light angle sensors;
measuring the angle of light incident on each light angle detector from the light source in two orthogonal axes; and
determining a three-dimensional position or displacement of the reference point based on the measured light angles, optionally using triangulation or multi-lateration.

**Patentansprüche**

1. Sensorvorrichtung, umfassend:

eine direkte oder indirekte Lichtquelle;
einen Lichtwinkelsensor, der konfiguriert ist, um den Winkel und die Intensität des einfallenden Lichts von der Lichtquelle zu messen; und
ein verformbares Element, das konfiguriert ist, um die Lichtquelle in einer Position oberhalb des Lichtwinkelsensors zu stützen, um Licht auf den Lichtwinkelsensor zu richten;
wobei die Vorrichtung konfiguriert ist, um eine Verschiebung der Lichtquelle und/oder eines Referenzpunkts in oder auf dem verformbaren Element relativ zum Lichtwinkelsensor zu erfassen, die mindestens teilweise auf einer Änderung des gemessenen Lichteinfallswinkels basiert, die durch eine Verformung des Elements erzeugt wird, die die Lichtquelle aus einer Ruheposition verschiebt.

2. Sensorvorrichtung nach Anspruch 1, wobei die Vorrichtung konfiguriert ist, um eine seitliche oder winkelmäßige Verschiebung der Lichtquelle basierend auf einer Änderung des gemessenen Lichteinfallswinkels zu erkennen.

3. Vorrichtung nach Anspruch 1 oder 2, wobei der Lichtwinkelsensor konfiguriert ist, um den Winkel des einfallenden Lichts in zwei Achsen in Bezug auf den Sensorreferenzrahmen zu messen.

4. Vorrichtung nach Anspruch 3, wobei die Vorrichtung konfiguriert ist, um eine Verschiebung der Lichtquelle in zwei oder drei Dimensionen zu erfassen, die mindestens teilweise auf den gemessenen Lichteinfallswinkeln basiert; und optional,

wobei die Vorrichtung konfiguriert ist, um die Verschiebung der Lichtquelle in drei Dimensionen basierend auf den gemessenen Winkeln und der Intensität des einfallenden Lichts zu erfassen.

5. Vorrichtung nach einem der vorstehenden Ansprüche, wobei die Vorrichtung ferner eine mit dem Lichtwinkelsensor kommunizierende Verarbeitungsvorrichtung umfasst, die konfiguriert ist, um eine Position und/oder eine Verschiebung des Referenzpunktes mindestens teilweise basierend auf dem gemessenen Lichteinfallswinkel zu bestimmen; und optional,

wenn sie direkt oder indirekt von Anspruch 3 abhängt,
wobei die Verarbeitungsvorrichtung konfiguriert ist, um eine Position und/oder eine Verschiebung des Referenzpunkts in drei Dimensionen basierend auf den gemessenen Lichteinfallswinkeln und der gemessenen Intensität zu bestimmen.

6. Vorrichtung nach einem der vorstehenden Ansprüche,

wobei die Vorrichtung zwei oder mehr Lichtwinkelsensoren umfasst, wobei jeder Lichtwinkelsensor konfiguriert ist, um den Winkel des von der Lichtquelle einfallenden Lichts in zwei Achsen zu messen, und
wobei die Vorrichtung konfiguriert ist, um die Verschiebung der Lichtquelle und/oder des Referenzpunktes in drei Dimensionen basierend auf den Messungen des Einfallswinkels von den zwei oder mehr Lichtwinkelsensoren zu erfassen.

7. Vorrichtung nach Anspruch 6, wobei die Vorrichtung ferner eine Verarbeitungsvorrichtung umfasst, die mit den zwei oder mehr Lichtwinkelsensoren in Verbindung steht, wobei die Verarbeitungsvorrichtung konfiguriert ist, um eine dreidimensionale Position und/oder einen dreidimensionalen Verschiebungsvektor des Referenzpunktes basierend auf den einfallenden Lichtwinkelmessungen von den zwei oder mehr Lichtwinkelsensoren zu bestimmen; optional unter Verwendung von Triangulation.

8. Vorrichtung nach einem der Ansprüche 5 oder 7, wobei die Verarbeitungsvorrichtung ferner konfiguriert ist, um einen auf die Vorrichtung wirkenden Kraftvektor basierend auf der ermittelten Verschiebung zu bestimmen.

9. Vorrichtung nach einem der vorstehenden Ansprüche,

wobei die Vorrichtung keine Lochblende zwischen der Lichtquelle und dem/den Lichtwinkelsensor(en) umfasst; und/oder wobei der Lichtwinkelsensor konfiguriert ist, um eine Lichtwinkelmessung ohne Verwendung einer externen Lochblende bereitzustellen; und/oder
wobei die Lichtquelle eine direkte Lichtquelle ist, die eine lichtemittierende Vorrichtung umfasst.

10. Vorrichtung nach einem der Ansprüche 1 bis 9, wobei die Lichtquelle eine indirekte Lichtquelle ist, die eine reflektierende Oberfläche umfasst, und die Vorrichtung ferner eine lichtemittierende Vorrichtung umfasst, wobei die reflektierende Oberfläche konfiguriert ist, um mindestens einen Teil des von der lichtemittierenden Vorrichtung emittierten Lichts auf den Lichtwinkelsensor zu reflektieren; optional oder vorzugsweise eine optisch diffuse Oberfläche; und optional, wobei die lichtemittierende Vorrichtung neben dem Lichtwinkelsensor angeordnet ist; und/oder

wobei die lichtemittierende Vorrichtung und der Lichtwinkelsensor auf derselben Trägerschicht befestigt sind; oder
wobei die lichtemittierende Vorrichtung und der Lichtwinkelsensor mindestens teilweise in das verformbare Element eingebettet sind oder von diesem gestützt werden.

11. Vorrichtung nach einem der vorstehenden Ansprüche, wobei die Lichtquelle an dem verformbaren Element angebracht oder darin eingebettet oder eingekapselt ist; und/oder
wobei die Lichtquelle eine lokalisierte Quelle ist.

12. Vorrichtung nach einem der vorstehenden Ansprüche,

wobei das verformbare Element einen Teil einer Deckschicht bildet, die sich über den/die Lichtwinkelsensor(en) erstreckt; und optional, wobei die Deckschicht einen Vorsprung oder eine Vertiefung umfasst, der/die über dem Lichtwinkelsensor positioniert ist; und/oder

wobei das verformbare Element sich mindestens teilweise um den Lichtwinkelsensor herum erstreckt.

13. Verfahren zum Erfassen der Verschiebung eines Referenzpunktes in oder auf einem verformbaren Element, umfassend:

Richten von Licht auf einen Lichtwinkelsensor von einer Lichtquelle, die an einer Position oberhalb des Lichtwinkelsensors durch das verformbare Element gestützt wird, wobei der Lichtwinkelsensor konfiguriert ist, um den Winkel und die Intensität von einfallendem Licht von der Lichtquelle zu messen;
Messen des Winkels des von der Lichtquelle auf einen Lichtwinkeldetektor einfallenden Lichts; und
Erfassen einer Verschiebung des Referenzpunktes relativ zum Lichtwinkelsensor, die mindestens teilweise auf einer Änderung des gemessenen Lichtwinkels basiert, die durch eine Verformung des Elements hervorgerufen wird, die die Lichtquelle aus einer Ruheposition verschiebt.

14. Verfahren nach Anspruch 13, ferner umfassend:

Messen des Winkels des von der Lichtquelle auf einen Lichtwinkeldetektor einfallenden Lichts in zwei orthogonalen Achsen;
Messen der Intensität des auf den Lichtwinkeldetektor einfallenden Lichts; und
Bestimmen einer dreidimensionalen Position oder Verschiebung des Referenzpunktes basierend auf den gemessenen Lichtwinkeln und der Intensität.

15. Verfahren nach Anspruch 13 oder 14, umfassend:

Richten des Lichts von der Lichtquelle auf zwei oder mehr Lichtwinkelsensoren;
Messen des Winkels des von der Lichtquelle auf jeden Lichtwinkeldetektor einfallenden Lichts in zwei orthogonalen Achsen; und
Bestimmen einer dreidimensionalen Position oder Verschiebung des Referenzpunktes basierend auf den gemessenen Lichtwinkeln, optional unter Verwendung von Triangulation oder Multilateration.

**Revendications**

1. Dispositif capteur, comprenant :

une source de lumière directe ou indirecte ;
un capteur d'angle de lumière configuré pour mesurer l'angle et l'intensité de la lumière incidente à partir de la source de lumière ; et
un élément déformable configuré pour supporter la source de lumière à une position au-dessus du capteur d'angle de lumière de manière à diriger la lumière vers le capteur d'angle de lumière ;
dans lequel le dispositif est configuré pour détecter le déplacement de la source de lumière et/ou d'un point de référence dans ou sur l'élément déformable par rapport au capteur d'angle de lumière, sur la base, au moins en partie, d'une variation de l'angle de lumière incidente mesuré produite par une déformation de l'élément qui déplace la source de lumière à partir d'une position de repos.

2. Dispositif capteur selon la revendication 1, dans lequel le dispositif est configuré pour détecter le déplacement latéral ou angulaire de la source de lumière sur la base d'une variation de l'angle de lumière incidente mesuré.

3. Dispositif selon la revendication 1 ou 2, dans lequel le capteur d'angle de lumière est configuré pour mesurer l'angle de lumière incidente en deux axes par rapport au cadre de référence de capteur.

4. Dispositif selon la revendication 3, dans lequel le dispositif est configuré pour détecter le déplacement de la source de lumière en deux ou trois dimensions sur la base, au moins en partie, des angles de lumière incidente mesurés ; et, éventuellement,
dans lequel le dispositif est configuré pour détecter le déplacement de la source de lumière en trois dimensions sur la base des angles mesurés et de l'intensité de lumière incidente.

**5.** Dispositif selon l'une quelconque revendication précédente, dans lequel le dispositif comprend en outre un dispositif de traitement en communication avec le capteur d'angle de lumière, le dispositif de traitement étant configuré pour déterminer une position et/ou un déplacement du point de référence sur la base, au moins en partie, de l'angle de lumière incidente mesuré ; et, éventuellement,

lorsqu'il dépend directement ou indirectement de la revendication 3, dans lequel le dispositif de traitement est configuré pour déterminer une position et/ou un déplacement du point de référence en trois dimensions sur la base des angles de lumière incidente mesurés et de l'intensité mesurée.

**6.** Dispositif selon l'une quelconque revendication précédente, dans lequel le dispositif comprend deux ou plusieurs capteurs d'angle de lumière, chaque capteur d'angle de lumière étant configuré pour mesurer l'angle de lumière incidente à partir de la source de lumière en deux axes, et

dans lequel le dispositif est configuré pour détecter le déplacement de la source de lumière et/ou du point de référence en trois dimensions sur la base des mesures d'angle de lumière incidente à partir des deux ou plusieurs capteurs d'angle de lumière.

**7.** Dispositif selon la revendication 6, dans lequel le dispositif comprend en outre un dispositif de traitement en communication avec les deux ou plusieurs capteurs d'angle de lumière, le dispositif de traitement étant configuré pour déterminer une position tridimensionnelle et/ou un vecteur de déplacement du point de référence sur la base des mesures d'angle de lumière incidente à partir des deux ou plusieurs capteurs d'angle de lumière ; éventuellement à l'aide de la triangulation.

**8.** Dispositif selon l'une quelconque des revendications 5 ou 7, dans lequel le dispositif de traitement est en outre configuré pour déterminer un vecteur de force agissant sur le dispositif sur la base du déplacement déterminé.

**9.** Dispositif selon l'une quelconque revendication précédente, dans lequel le dispositif ne comprend pas d'ouverture de sténopé entre la source de lumière et le ou les capteurs d'angle de lumière ; et/ou dans lequel le capteur d'angle de lumière est configuré pour fournir une mesure de l'angle de lumière sans utiliser d'ouverture de sténopé externe ; et/ou dans lequel la source de lumière est une source de lumière directe comprenant un dispositif d'émission de lumière.

**10.** Dispositif selon l'une quelconque des revendications 1 à 9, dans lequel la source de lumière est une source de lumière indirecte comprenant une surface réfléchissante et le dispositif comprend en outre un dispositif d'émission de lumière, la surface réfléchissante étant configurée pour réfléchir au moins une partie de la lumière émise par le dispositif d'émission de lumière vers le capteur d'angle de lumière ; éventuellement ou de préférence une surface optiquement diffuse ; et, éventuellement, dans lequel le dispositif d'émission de lumière est agencé à proximité du capteur d'angle de lumière ; et/ou

dans lequel le dispositif d'émission de lumière et le capteur d'angle de lumière sont montés sur la même couche de support ; ou
dans lequel le dispositif d'émission de lumière et le capteur d'angle de lumière sont au moins partiellement intégrés dans l'élément déformable ou supportés par celui-ci.

**11.** Dispositif selon l'une quelconque revendication précédente, dans lequel la source de lumière est fixée à l'élément déformable, ou intégrée ou encapsulée dans celui-ci ; et/ou
dans lequel la source de lumière est une source localisée.

**12.** Dispositif selon l'une quelconque revendication précédente, dans lequel l'élément déformable fait partie d'une couche de recouvrement s'étendant au-dessus du ou des capteurs d'angle de lumière ; et, éventuellement, dans lequel la couche de recouvrement comprend une saillie ou un renfoncement positionné au-dessus du capteur d'angle de lumière ; et/ou
dans lequel l'élément déformable s'étend au moins partiellement autour du capteur d'angle de lumière.

**13.** Procédé de détection du déplacement d'un point de référence dans ou sur un élément déformable, comprenant :

la direction de la lumière vers un capteur d'angle de lumière à partir d'une source de lumière supportée à une position au-dessus du capteur d'angle de lumière par l'élément déformable, le capteur d'angle de lumière étant configuré pour mesurer l'angle et l'intensité de lumière incidente à partir de la source de lumière ;
la mesure de l'angle d'incidence de lumière sur un détecteur d'angle de lumière à partir de la source de lumière ; et
la détection d'un déplacement du point de référence par rapport au capteur d'angle de lumière sur la base au moins en partie d'une variation de l'angle de lumière mesuré produite par une déformation de l'élément qui déplace la source de lumière d'une position de repos.

**14.** Procédé selon la revendication 13, comprenant en outre :

la mesure de l'angle d'incidence de lumière sur un détecteur d'angle de lumière à partir de la source de lumière en deux axes orthogonaux ;
la mesure de l'intensité d'incidence de lumière sur le détecteur d'angle de lumière ; et
la détermination d'une position ou d'un déplacement tridimensionnel du point de référence sur la base des angles de lumière et de l'intensité mesurés.

**15.** Procédé selon la revendication 13 ou 14, comprenant :

la direction de la lumière à partir de la source de lumière vers deux ou plusieurs capteurs d'angle de lumière ;
la mesure de l'angle d'incidence de lumière sur chaque détecteur d'angle de lumière à partir de la source de lumière en deux axes orthogonaux ; et
la détermination d'une position ou d'un déplacement tridimensionnel du point de référence sur la base des angles de lumière mesurés, éventuellement à l'aide de la triangulation ou de la multilatération.

100

Figure 1

200

Figure 2

Figure 3

Figure 4

300

310e

320

340

410
Frond end

420
Processing device

Processing circuit 400

Figure 5

r(x,y,z)

310e

300

330

330c

301

320

Figure 6

r(x,y,z)

300

330

310r

330c

320

301

320a

340

320b

D

Figure 7

<u>300</u>

330

r(x,y,z)

310r

330c

340    340

301

S    D    S

320

Figure 8

r(x,y,z)

310r

330

350

340    320    340    301

S    D    S

Figure 9

Figure 10

Figure 11

Figure 12

Figure 13

Figure 14

Figure 15

Figure 16

Figure 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100253650 A1
- US 20140326882 A1
- WO 2019033159 A1